Europäisches Patentamt

(19) European Patent Office

Office européen des brevets

(11) Publication number: **0 280 658 B1**

## (12) EUROPEAN PATENT SPECIFICATION

(45) Date of publication of patent specification:
**03.04.91 Bulletin 91/14**

(51) Int. Cl.⁵: **B60S 1/08**

(21) Application number: **88830021.7**

(22) Date of filing: **19.01.88**

(54) Windscreen-wiper device for motor vehicles.

(30) Priority: **21.01.87 IT 6703587**

(43) Date of publication of application:
**31.08.88 Bulletin 88/35**

(45) Publication of the grant of the patent:
**03.04.91 Bulletin 91/14**

(84) Designated Contracting States:
**AT BE CH DE ES FR GB GR IT LI LU NL SE**

(56) References cited:
**EP-A- 0 049 901
EP-A- 0 184 312
FR-A- 2 538 327**

(73) Proprietor: **INDUSTRIE MAGNETI MARELLI
S.p.A.
Via Adriano 81
I-20128 Milano (IT)**

(72) Inventor: **May, Pierluigi
Via Ruggero di Lauria 3
I-20149 Milano (IT)**
Inventor: **Pedani, Giuseppe
Via Pacini 66
I-20131 Milano (IT)**

(74) Representative: **Rambelli, Paolo et al
Jacobacci-Casetta & Perani S.p.A. Via Alfieri
17
I-10121 Torino (IT)**

## Description

The present invention relates to an apparatus for controlling a vehicle windscreen-wiper system and to the windscreen-wiper system comprising such apparatus

From FR-A-2 538 327, it is known to provide an apparatus for controlling a vehicle windscreen-wiper system having a pair of geared motor units effective to drive wiper arms through repeating, overlapping patterns across a vehicle windscreen. Such control apparatus comprises :

– a position sensor for each wiper arm effective to generate a signal representing a predetermined position of the wiper arm on the windscreen, and

– a control circuit responsive to the signals from the position sensors for operating each of the geared motor units for a predetermined period of time.

The present invention provides an apparatus of the above mentioned type characterised in that the control circuit is effective to operate each of the geared motor units alternatively as soon as the wiper arm driven by the other of said geared motor unit has reached its predetermined position.

Naturally, the predetermined positions and the period of operation of the geared motor units will be selected in such a way as to prevent the wiper arms from being superimposed during their operation.

The advantages and further characteristics of the apparatus according to the invention will become clear from the detailed description which follows, purely by way of non-limiting example, with reference to the appended drawings, in which :

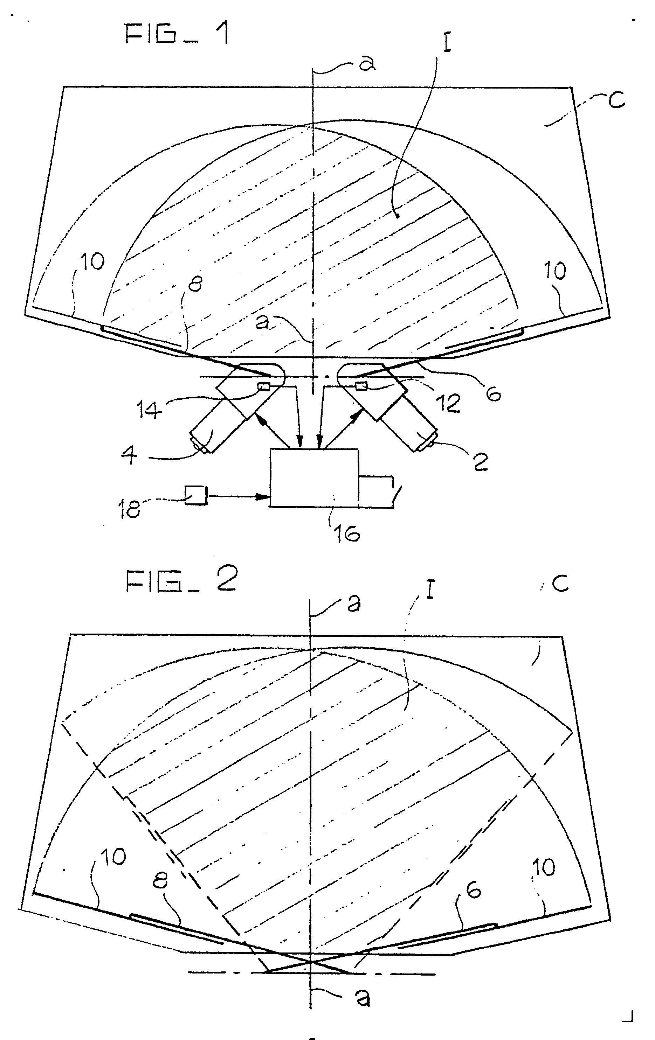

Figures 1 and 2 are schematic views illustrating two variants of a windscreen-wiper -system comprising the apparatus according to the invention. The windscreen-wiper system itself constitutes a further subject of the invention.

In the drawings, geared motor units with internal mechanisms of known type and carried by the structure of the motor vehicle, not illustrated, are indicated 2 and 4, and are each provided with a respective wiper arm 6 and 8 with respective wiper blades 10 which wipe the glass C of a motor vehicle windscreen. The wiper arms are positioned so that the areas wiped by each wiper arm and its respective blade have an overlapping zone I indicated by hatching.

In Figure 1, the centres of rotation of the wiper arms are positioned on opposite sides of a transverse axis of symmetry a-a of the window and the arms, illustrated in their starting positions, extend in diverging directions. The variant of Figure 2 differs in that the arms extend in converging directions. Although further variants are also possible with regard to the starting positions of the wiper arms, the arrangements illustrated in Figures 1 and 2 are preferred as they enable the zone of overlap I between the areas wiped by the wiper arms to be made wider.

Each geared motor unit includes a position sensor 12 and 14, associated with a respective wiper arm and arranged to supply a signal to a control and operating circuit 16 when the wiper arm associated with it has reached a predetermined position in its stroke.

The control and operating circuit 16 is arranged to operate each geared motor unit for a predetermined period of time and to emit operating signals for the geared motor units 2 and 4 alternately when the position sensor (14 and 12 respectively) associated with the wiper arm of the other geared motor unit signals that the arm associated with it has reached the predetermined position. The period of operation of each geared motor unit is preferably such as to permit a complete stroke of the wiper arm.

In one embodiment, the sensors are arranged to signal the starting position of the wiper arms so that the control circuit causes the alternating operation of the two geared motor units. Each wiper arm starts its stroke when the other arm has reached a stop position corresponding to its starting position.

In this case, the position sensor may consist of a known type of end-of-stroke switch and be used automatically to stop the arm in the end-of-stroke position, whatever momentary position the arm assumes at the instant when the supply is switched off.

According to one variant, the position sensors may be arranged to signal to the control and operating circuit an intermediate position in the stroke of the respective wiper arm, and preferably a position near the zone I of intersection of the surfaces wiped by the wiper arms, such that the consequent operation of the other wiper arm does not give rise to the two arms being superimposed. In this case, therefore, the control and operating circuit operates one arm from its stop position, which corresponds to the starting position, when the other arm is still completing its stroke.

The advantages arising from the characteristics of the windscreen-wiper device according to the invention lie principally in that it has good reliability in combination with a low manufacturing cost. In fact, the use of two separate independent geared motor units with wiper arms which wipe overlapping areas means that, in the event of failure of one geared motor unit, the windscreen-wiper can carry on operating to afford sufficient visibility for the driver. Furthermore, the device does not require the use of complicated mechanisms for transmitting the drive and is thus economical, compact and, moreover, very quiet.

The control and operating circuit may also be arranged to cause independent and continuous operation of each of the geared motor units upon operation of a manually-controlled switch 18 connected to the circuit.

Operation of the switch to cause operation of a single geared motor unit may be convenient, for example, in conditions of a low level of charging of the battery of the motor vehicle.

## Claims

1. Apparatus for controlling a vehicle windscreen-wiper system having a pair of geared motor units (2, 4) effective to drive wiper arms (6, 8) through repeating, overlapping patterns across a vehicle windscreen, the control apparatus comprising :
– a position sensor (12, 14) for each wiper arm (6, 8) effective to generate a signal representing a predetermined position of the wiper arm (6, 8) on the windscreen, and
– a control circuit (16) responsive to the signals from the position sensors (12, 14) for operating each of the geared motor units (2, 4) for a predetermined period of time,
characterised in that the control circuit (16) is effective to operate each of the geared motor units (2, 4) alternatively as soon as the wiper arm (8, 6) driven by the other of said geared motor unit (4, 2) has reached its predetermined position.

2. An apparatus according to claim 1, characterised in that the position sensor members (12, 14) are arranged to signal the end-of-stroke position of the respective arm.

3. An apparatus according to claim 2, characterised in that the position sensors (12, 14) consist of end-of-stroke switches.

4. An apparatus according to claim 1, characterised in that the position sensors (12, 14) are arranged to signal an intermediate position in the stroke of the respective wiper arm.

5. An apparatus according to any one of claims 1 to 4, characterised in that the control and operating circuit (16) is further arranged to cause-independent operation of each of the geared motor units upon operation of a manually-controlled switch connected to this circuit.

6. A windscreen-wiper system comprising an apparatus according to any of claims 1 to 5.

7. A windscreen-wiper system according to claim 6, characterised in that the wiper arms (6, 8) are arranged with their respective centres of rotation on opposite sides of the transverse axis of symmetry of the window, and in that they extend in diverging directions in their starting positions.

8. A windscreen-wiper system according to claim 6, characterised in that the wiper arms (6, 8) are arranged with their centres of rotation on opposite sides of the transverse axis of symmetry of the window, and in that they extend in converging directions in their starting positions.

## Revendications

1. Dispositif de commande d'un système d'essuie-glace de véhicule comportant deux ensembles moto-réducteurs (2, 4) affectés à l'entraînement de bras d'essuie-glace (6, 8) en décrivant des dessins de balayage répétés et se chevauchant sur un pare-brise de véhicule, le dispositif de commande comprenant :
– un capteur de positionnement (12, 14) pour chaque bras d'essuie-glace (6, 8) susceptible de produire un signal représentant une position prédéterminée du bras d'essuie-glace (6, 8) sur le pare-brise, et
– un circuit de commande (16) sensible aux signaux provenant des capteurs de position (12, 14), pour actionner chacun des ensembles moto-réducteurs (2, 4) pendant une période de temps prédéterminée,
caractérisé en ce que le circuit de commande (16) est susceptible d'actionner chacun des ensembles moto-réducteurs (2, 4) alternativement, dès que le bras d'essuie-glace (8, 6) entraîné par l'autre ensemble moto-réducteur (4, 2) a atteint sa position prédéterminée.

2. Un dispositif selon la revendication 1, caractérisé en ce que les organes capteurs de position (12, 14) sont disposés pour signaler la position de fin de course du bras respectif.

3. Un dispositif selon la revendication 2, caractérisé en ce que les capteurs de position (12, 14) consistent en des interrupteurs de fin de course.

4. Un dispositif selon la revendication 1, caractérisé en ce que les capteurs de position (12, 14) sont disposés pour signaler une position intermédiaire dans la course du bras d'essuie-glace respectif.

5. Un dispositif selon l'une quelconque des revendications 1 à 4, caractérisé en ce que le circuit de commande et d'actionnement (16) est en outre disposé pour provoquer un fonctionnement indépendant dans chacun des ensembles moto-réducteurs lors de l'actionnement d'un interrupteur à commande manuelle relié à ce circuit.

6. Un système d'essuie-glace comprenant un dispositif selon l'une quelconque des revendications 1 à 5.

7. Un système d'essuie-glace selon la revendication 6, caractérisé en ce que les bras d'essuie-glace (6, 8) sont disposés avec leur centre de rotation respectif situés sur les côtés opposés de l'axe de symétrie transversal du pare-brise, et en ce qu'ils s'étendent dans des directions divergentes lorsqu'ils sont en position de départ.

8. Un système d'essuie-glace selon la revendication 6, caractérisé en ce que les bras d'essuie-glace (6, 8) sont disposés avec leurs centres de rotation situés sur les côtés opposés de l'axe de symétrie transversal du pare-brise, et en ce qu'ils s'étendent dans des directions convergentes lorsqu'ils sont en

position de départ.

in zusammenlaufende Richtungen verlaufen.

**Ansprüche**

1. Vorrichtung zur Steuerung einer Scheibenwischanlage eines Kraftfahrzeuges mit einem Paar Getriebemotoreinheiten (2, 4), die den Wischarm (6, 8) in sich wiederholenden, überlappenden Wischmustern über eine Windschutzscheibe eines Kraftfahrzeuges bewegen, bestehend aus :

 – einem Stellungssensor (12, 14) für jeden Wischarm (6, 8) zur Erzeugung eines Signals, das eine vorbestimmte Stellung des Wischarmes (6, 8) auf der Windschutzscheibe darstellt, und

 – eine Steuerschaltung (16), die auf die Signale von den Stellungssensoren (12, 14) zum Betrieb einer jeden der Getriebemotoreinheiten (2, 4) für eine vorbestimmte Zeitspanne anspricht,

**dadurch gekennzeichnet,** daß die Steuerschaltung (16) im Betrieb eine jede der Getriebemotoreinheiten (2, 4) alternativ betreibt, sobald der von der anderen Getriebemotoreinheit (4, 2) angetriebene Wischarm (8, 6) seine vorbestimmte Stellung erreicht hat.

2. Vorrichtung nach Anspruch 1, **dadurch gekennzeichnet,** daß die Stellungssensorenteile (12, 14) so ausgelegt sind, daß sie die Endausschlag-Stellung des jeweiligen Wischarmes signalisieren.

3. Vorrichtung nach Anspruch 2, **dadurch gekennzeichnet,** daß die Stellungssensoren (12, 14) aus Endausschlag-Schaltern bestehen.

4. Vorrichtung nach Anspruch 1, **dadurch gekennzeichnet,** daß die Stellungssensoren (12, 14) so ausgelegt sind, daß sie eine Zwischenstellung in dem Wischgang des jeweiligen Wischarmes signalisieren.

5. Vorrichtung nach einem der Ansprüche 1 bis 4, **dadurch gekennzeichnet,** daß die Steuer- und Betriebsschaltung (16) weiterhin dazu ausgelegt ist, einen unabhängigen Betrieb einer jeden der Getriebemotoreinheiten auf Betätigung eines mit dieser Schaltung verbundenen, manuellen Schalters zu bewirken.

6. Scheibenwischanlage bestehend aus einer Vorrichtung gemäß einem der Ansprüche 1 bis 5.

7. Scheibenwischanlage nach Anspruch 6, **dadurch gekennzeichnet,** daß die Wischarme (6, 8) mit ihren jeweiligen Rotationszentren auf gegenüberliegenden Seiten der Quersymmetrieachse des Fensters angeordnet sind, und daß sie in ihren Ausgangsstellungen in auseinandergehende Richtungen verlaufen.

8. Scheibenwischanlage nach Anspruch 6, **dadurch gekennzeichnet,** daß die Wischarme (6, 8) mit ihren Rotationszentren auf gegenüberliegenden Seiten der Quersymmetrieachsen des Fensters angeordnet sind, und daß sie in ihren Ausgangsstellungen

## FIG_ 1

## FIG_ 2